# EUROPEAN PATENT APPLICATION

(11) **EP 4 258 076 A1**
(43) Date of publication of application: **11.10.2023**
(21) Application number: 21900096.5
(22) Date of filing: 03.12.2021
(51) Int. Cl.: G05D 1/02

(54) **AUTONOMOUS WORKING DEVICE, AND CONTROL METHOD THEREFOR**

(30) Priority: 03.12.2020 CN 202011393775
(71) Applicant: Positec Power Tools (Suzhou) Co., Ltd., Suzhou, Jiangsu 215123 (CN)
(72) Inventor: CONTI, Emanuel, Suzhou, Jiangsu 215123 (CN)
(74) Representative: Dentons UK and Middle East LLP
(86) International application number: PCT/CN2021/135333
(87) International publication number: WO 2022/117072

(57) **Abstract**

This application relates to an autonomous working apparatus and a control method for an autonomous working apparatus. The autonomous working apparatus includes: a moving assembly, configured to drive the autonomous working apparatus to move in a working area; a sensor assembly, including at least a first sensing element and a second sensing element different from the first sensing element, the first sensing element being configured to obtain surrounding environment data of the autonomous working apparatus, and the second sensing element being configured to obtain the surrounding environment data of the autonomous working apparatus or positioning data of a current position of the autonomous working apparatus; and a processing device, connected at least to the sensor assembly, the processing device being configured to determine a category of an area in a direction of travel of the autonomous working apparatus based on a processing result of data input by the second sensing element and to generate at least one processing instruction associated with the first sensing element according to the category.

## Description

### BACKGROUND

### Technical Field

This application relates to an autonomous working apparatus and a control method for an autonomous working apparatus, and belongs to the technical field of automatic control.

### Related Art

At present, an autonomous working apparatus with an automatic walking function is widely used as, for example, an intelligent mower, a sweeping robot, or the like. In order to make the autonomous working apparatus capable of avoiding obstacles automatically, the autonomous working apparatus is usually provided with an ultrasonic sensor for detecting the obstacles.

However, when there is an uphill in a direction of travel of the autonomous working apparatus, it is likely to misjudge the uphill as an obstacle, which leads to the problem that the autonomous working apparatus mistakenly executes an obstacle avoidance strategy.

### SUMMARY

This application provides an autonomous working apparatus and a control method for an autonomous working apparatus, which may solve the problem that when a sensor assembly mistakenly detects a preset area as an obstacle, the autonomous working apparatus cannot move to the preset area. This application provides the following technical solution.

According to a first aspect, an autonomous working apparatus is provided, including:
a moving assembly, configured to drive the autonomous working apparatus to move in a working area;
a sensor assembly, including at least a first sensing element and a second sensing element different from the first sensing element, the first sensing element being configured to obtain surrounding environment data of the autonomous working apparatus, and the second sensing element being configured to obtain the surrounding environment data of the autonomous working apparatus or positioning data of a current position of the autonomous working apparatus; and
a processing device, connected at least to the sensor assembly, the processing device being configured to determine a category of an area in a direction of travel of the autonomous working apparatus based on a processing result of data input by the second sensing element and to generate at least one processing instruction associated with the first sensing element according to the category.

Optionally, the category of the area includes a first area having a gradient within a preset range. The processing device is configured to generate an instruction for instructing to reduce a detection distance of the first sensing element when determining that the area in the direction of travel of the autonomous working apparatus is the first area.

Optionally, the category of the area includes a first area having a gradient within a preset range. The processing device is configured to generate an instruction for instructing to turn off the first sensing element when determining that the area in the direction of travel of the autonomous working apparatus is the first area.

Optionally, the category of the area includes a first area having a gradient within a preset range. The processing device is configured to generate an instruction for instructing to filter the surrounding environment data of the autonomous working apparatus obtained by the first sensing element when determining that the area in the direction of travel of the autonomous working apparatus is the first area.

Optionally, the second sensing element is configured to obtain the surrounding environment data of the autonomous working apparatus. The processing device is further configured to determine whether an obstacle surrounds the autonomous working apparatus based on fusion of data input by the first sensing element and the second sensing element. The category of the area includes a first area having a gradient within a preset range. The processing device is configured to generate an instruction for instructing to reduce a fusion ratio of the surrounding environment data of the autonomous working apparatus obtained by the first sensing element when determining that the area in the direction of travel of the autonomous working apparatus is the first area.

Optionally, the second sensing element includes at least one of a LIDAR sensor and a vision sensor.

Optionally, the second sensing element is configured to obtain positioning data of a current position of the autonomous working apparatus. The positioning data includes height data of the current position of the autonomous working apparatus. The processing device is configured to calibrate a position of a first area having a gradient within a preset range in the working area according to the height data of the surface of the working area before the autonomous working apparatus executes a working task.

Optionally, the processing device is further configured to determine whether a distance between the autonomous working apparatus and the first area in the direction of travel is less than or equal to a preset distance, and to generate the at least one processing instruction if the distance is less than or equal to the preset distance.

Optionally, the second sensing element includes a satellite positioning sensor.

Optionally, the first sensing element includes an ultrasonic sensor.

Optionally, a detection distance of the ultrasonic sensor is less than or equal to 60 cm.

Optionally, a detection distance of the ultrasonic sensor is less than or equal to 38 cm.

According to a second aspect, a control method for an autonomous working apparatus is provided. The autonomous working apparatus includes a moving assembly, a sensor assembly, and a processing device connected at least to the sensor assembly. The sensor assembly includes at least a first sensing element and a second sensing element different from the first sensing element. The control method is applied to the processing device. The control method includes:
controlling the first sensing element to obtain surrounding environment data of the autonomous working apparatus;
controlling the second sensing element to obtain the surrounding environment data of the autonomous working apparatus or positioning data of a current position of the autonomous working apparatus;
determining a category of an area in a direction of travel of the autonomous working apparatus according to a processing result of data input by the second sensing element; and
generating at least one processing instruction associated with the first sensing element according to the category.

According to a third aspect, a processing device is provided. The processing device includes at least one processor and a storage medium. The memory stores a program loaded and executed by the at least one processor to implement the steps of the control method for the autonomous working apparatus provided according to the second aspect.

According to a fourth aspect, a computer-readable storage medium is provided. The storage medium stores a computer program. The computer program, when executed by a processor, implements the steps of the control method for the autonomous working apparatus provided according to the second aspect.

This application has the following beneficial effects. A category of an area in a direction of travel of an autonomous working apparatus is determined based on data of a second sensor, and a processing device generates a processing instruction associated with a first sensing element according to the category. The problem that the first sensing element (such as an ultrasonic sensor) executes an obstacle avoidance action upon mistaken detection of a slope as an obstacle and thus cannot move forward up the slope may be at least solved. Therefore, the autonomous working apparatus of this application may normally execute the obstacle avoidance action without affecting a climbing function and a mowing task of the autonomous working apparatus.

The above description is only an overview of the technical solution of this application. In order that the technical means of this application is understandable more clearly and implementable according to the contents of the specification, preferred embodiments of this application are described in detail below with the accompanying drawings.

### BRIEF DESCRIPTION OF THE DRAWINGS

FIG. 1 is a schematic structural diagram of an autonomous working apparatus according to an embodiment of this application.
FIG. 2 is a schematic module connection diagram of an autonomous working apparatus according to an embodiment of this application.
FIG. 3 is a flowchart of a control method for an autonomous working apparatus according to an embodiment of this application.
FIG. 4 is a block diagram of a processing device of an autonomous working apparatus according to an embodiment of this application.

### DETAILED DESCRIPTION

Specific implementations of this application are described in further detail in the following with reference to the accompanying drawings and embodiments. The following embodiments are used to illustrate this application and not to limit the scope of this application.

First, several terms described in this application are introduced.

Real-time kinematic (RTK) carrier phase differential technology is an RTK positioning technology based on a carrier phase observation value, which can provide a three-dimensional positioning result of a station in a specified coordinate system in real time and achieve centimeter-level accuracy.

The working principle of RTK includes that a reference station transmits position information and current coordinate information obtained from a positioning satellite to a mobile station. The mobile station receives the position information from the reference station and the position information from the positioning satellite, composes a differential observation value in the system for real-time processing, and also provides a centimeter-level positioning result.

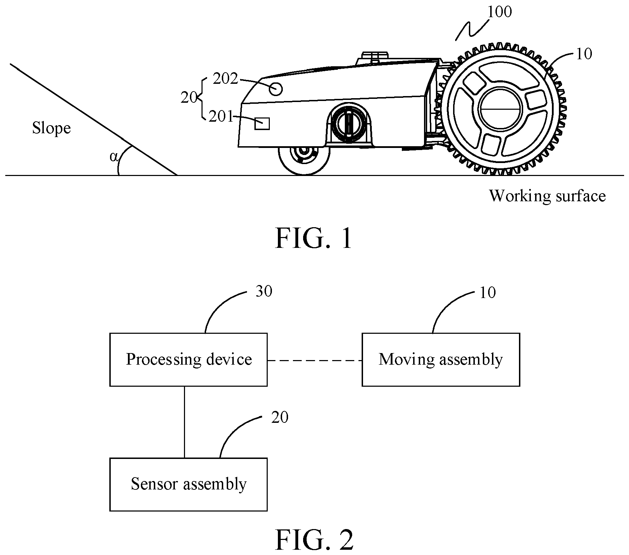

FIG. 1 is a schematic structural diagram of an autonomous working apparatus 100 according to an embodiment of this application. The autonomous working apparatus 100 may be an intelligent mower, a sweeping robot, a mopping robot, or another device with an automatic walking function. This embodiment describes the autonomous working apparatus as an intelligent mower without limiting a device type of the autonomous working apparatus. As shown in FIG. 1 and FIG. 2, the autonomous working apparatus 100 includes at least: a moving assembly 10 a sensor assembly 20, and a processing device 30. The processing device 30 is connected at least to the sensor assembly 20.

The moving assembly 10 is configured to drive the autonomous working apparatus 100 to move in a working area. In one example, the moving assembly 10 includes a drive assembly and a moving mechanism in transmission connection with the drive assembly. The drive assembly may be a generator, a motor, or the like. The moving mechanism may be a wheel body. This embodiment is not limited to the implementations of the drive assembly and the moving mechanism. Optionally, as shown in FIG. 2, the processing device 30 may be further connected to the moving assembly 10, so as to control the moving assembly 10 to drive the autonomous working apparatus to move in the working area.

The sensor assembly 20 includes at least a first sensing element 201 and a second sensing element 202 different from the first sensing element 201. The first sensing element 201 is configured to obtain surrounding environment data of the autonomous working apparatus 100. The second sensing element 202 is configured to obtain the surrounding environment data of the autonomous working apparatus 100 or positioning data of a current position of the autonomous working apparatus. Optionally, the first sensing element 201 may be configured to transmit a signal (such as an ultrasonic signal or an optical signal) around the autonomous working apparatus 100 and receive a reflected signal of the signal, so as to obtain surrounding environment data of the autonomous working apparatus 100. A signal transmitting direction includes a direction of travel of the autonomous working apparatus 100. Optionally, the second sensing element 202 may obtain the surrounding environment data of the autonomous working apparatus in different manners (such as image sensing) or current positioning data of the autonomous working apparatus in a manner such as satellite positioning.

Optionally, the first sensing element 201 may be an ultrasonic sensor. At this moment, the signal is an ultrasonic signal. Alternatively, the first sensing element 201 may be an infrared sensor. At this moment, the signal is an infrared signal. Optionally, the second sensing element 202 may be a satellite positioning sensor which may be configured to obtain latitude and longitude data and height data of the autonomous working apparatus.

Since the first sensing element 201 detects environment data by transmitting and receiving signals, it is likely to perform an obstacle avoidance operation by misjudging that there are obstacles around when there are slopes or high-density grass around or when the apparatus falls into a pit, which leads to the inability to normally execute working tasks in slope or high-density grass areas or makes it difficult for the apparatus to get out of trouble.

Therefore, this application is improved in that the processing device 30 determines a category of an area in a direction of travel of the autonomous working apparatus 100 based on a processing result of data input by the second sensing element 202 and generates at least one processing instruction associated with the first sensing element 201 according to the category. Optionally, the area in the direction of travel of the autonomous working apparatus 100 may be an area at which the autonomous working apparatus 100 will arrive after the current moment. Optionally, the direction of travel of the autonomous working apparatus may be determined by the processing device 30 according to an operating state of the moving assembly. For example, the direction of travel is determined according to a direction of a wheel. Alternatively, the direction of travel is determined according to a sensing assembly such as a gyroscope in the autonomous working apparatus. This embodiment is not limited to the manner of determining the direction of travel.

The autonomous working apparatus 100 of this embodiment may determine a category of an area in the direction of travel of the autonomous working apparatus 100 based on data of the second sensor 202, and the processing device 30 generates a processing instruction associated with the first sensing element 201 according to the category. For example, when it is determined that the area in the direction of travel of the autonomous working apparatus 100 is a slope, at least one processing instruction associated with the first sensing element 201 may be generated to interfere with the detection of the first sensing element 201 or environment data detected by the first sensing element, thereby reducing the dependence of the autonomous working apparatus 100 on the first sensor 201 when identifying obstacles, and solving the misjudgment problem in the foregoing scenarios. When it is determined that the area in the direction of travel of the autonomous working apparatus 100 is a high-density grass area, the misjudgment problem may be solved in the same manner to ensure the normal working of the autonomous working apparatus 100.

Therefore, the autonomous working apparatus 100 of this application may solve at least the problem that the first sensing element (such as an ultrasonic sensor) executes an obstacle avoidance action upon mistaken detection of a slope and high-density grass as an obstacle and thus cannot move forward up the slope. In other words, the autonomous working apparatus 100 of this application may normally execute the obstacle avoidance action without affecting a climbing function and a mowing task of the autonomous working apparatus 100.

In an implementation, the category of the area includes a first area having a gradient within a preset range. The processing device 30 is configured to generate an instruction for instructing to reduce a detection distance of the first sensing element 201 when determining that the area in the direction of travel of the autonomous working apparatus 100 is the first area.

For example, as shown in FIG. 1, the first area represents an uphill area in which a gradient (namely, a) is greater than a gradient threshold. A mounting height of the sensor assembly 20 is greater than the height of the ground where the autonomous working apparatus is located. Therefore, when the gradient of the uphill area is small, the uphill area is not mistakenly detected as an obstacle. When the gradient of the uphill area is large, the uphill area will be mistakenly detected as an obstacle. Based on this, the gradient threshold is a critical gradient that causes the sensor assembly 20 to mistakenly detect the uphill area as an obstacle. Optional, the critical gradient may be 20 degrees, 25 degrees, 30 degrees, or 35 degrees, which may specifically be set according to actual situations. In addition, an area with a large slope may be identified as an obstacle boundary, such as an area with a slope greater than 70 degrees. To sum up, optionally, the gradient range is 20-70 degrees. Optionally, the gradient range is 25-60 degrees. Optionally, the gradient range is 25-55 degrees.

In this embodiment, when the area in the direction of travel of the autonomous working apparatus 100 is determined as the first area, the detection capability of the first sensing element 201 is reduced by reducing the detection distance of the first sensing element 201, thereby avoiding misjudging the first area as an obstacle. In addition, after the autonomous working apparatus 100 leaves the first area for a predetermined distance or a predetermined time, the processing device 30 may be further configured to stop generating an instruction for reducing the detection distance of the first sensing element 201, so as to restore the normal detection capability of the first sensing element 201. Therefore, the autonomous working apparatus 100 may successfully avoid obstacles without affecting the climbing function of the autonomous working apparatus.

In an implementation, the processing device 30 is configured to generate an instruction for instructing to turn off the first sensing element 201 when determining that the area in the direction of travel of the autonomous working apparatus 100 is the foregoing first area. By turning off the first sensing element 201, it is possible to avoid the first area being misjudged as an obstacle to the greatest extent. In addition, after the autonomous working apparatus 100 leaves the first area for the predetermined distance or the predetermined time, the processing device 30 may be further configured to stop generating an instruction for turning off the first sensing element 201, so as to restore the normal detection capability of the first sensing element 201. Therefore, the autonomous working apparatus 100 may successfully avoid obstacles without affecting the climbing function of the autonomous working apparatus.

In an implementation, the processing device 30 is configured to generate an instruction for instructing to filter the surrounding environment data of the autonomous working apparatus 100 obtained by the first sensing element 201 when determining that the area in the direction of travel of the autonomous working apparatus 100 is the foregoing first area. By filtering the surrounding environment data of the autonomous working apparatus 100 obtained by the first sensing element 201, it is possible to avoid processing the data of the first sensor 201, thereby avoiding misjudging the first area as an obstacle as much as possible. In addition, after the autonomous working apparatus 100 leaves the first area for the predetermined distance or the predetermined time, the processing device 30 may be further configured to stop generating an instruction for filtering the surrounding environment data of the autonomous working apparatus 100 obtained by the first sensing element 201, so as to restore the normal data processing of the first sensing element 201. Therefore, the autonomous working apparatus 100 may successfully avoid obstacles without affecting the climbing function of the autonomous working apparatus.

In an implementation, the second sensing element 202 is configured to obtain the surrounding environment data of the autonomous working apparatus 100. The processing device 30 is further configured to determine whether an obstacle surrounds the autonomous working apparatus 100 based on fusion of data input by the first sensing element 201 and the second sensing element 202. The processing device 30 is configured to generate an instruction for instructing to reduce a fusion ratio of the surrounding environment data of the autonomous working apparatus obtained by the first sensing element 201 when determining that the area in the direction of travel of the autonomous working apparatus 100 is the first area. By reducing the fusion ratio of the surrounding environment data of the autonomous working apparatus obtained by the first sensing element 201, the possibility of misjudgment of the autonomous working apparatus 100 may be reduced when the autonomous working apparatus 100 travels to the first area, and the obstacle identification capability of the autonomous working apparatus 100 may be ensured. In addition, after the autonomous working apparatus 100 leaves the first area for a predetermined distance or a predetermined time, the processing device 30 may be further configured to stop generating an instruction for reducing the fusion ratio of the surrounding environment data of the autonomous working apparatus obtained by the first sensing element 201, so as to restore the normal data processing of the first sensing element 201. Therefore, the autonomous working apparatus 100 may successfully avoid obstacles without affecting the climbing function of the autonomous working apparatus.

In an implementation, the category of the area includes a second area having a grass height within a preset height range. When the processing device 30 determines that the area in the direction of travel of the autonomous working apparatus 100 is the second area, an instruction for instructing to reduce a detection distance of the first sensing element 201 is generated; or, an instruction for instructing to turn off the first sensing element 201 is generated; or, an instruction for filtering the surrounding environment data of the autonomous working apparatus 100 obtained by the first sensing element 201 is generated; or, an instruction for instructing to reduce the fusion ratio of the surrounding environment data of the autonomous working apparatus obtained by the first sensing element 201 is generated. In this way, the high-density grass area may be avoided from being misjudged as an obstacle, thereby effectively cutting the high-density grass area.

In an implementation, the second sensing element 202 includes at least one of a LIDAR sensor and a vision sensor. Through the data returned by the sensors, obstacles, slopes, high-density grass, and other areas may be identified more accurately, thereby ensuring the normal operation of working tasks.

In an implementation, the second sensing element 202 is configured to obtain positioning data of a current position of the autonomous working apparatus 100. The positioning data includes height data of the current position of the autonomous working apparatus 100. The processing device 30 is configured to calibrate a position of a first area having a gradient within a preset range in the working area according to the height data of the surface of the working area before the autonomous working apparatus 100 executes a working task.

Optionally, the second sensor 202 may include a satellite positioning sensor. The satellite positioning sensor is configured to obtain the positioning data of the current position of the autonomous working apparatus in real time. Optionally, the satellite positioning sensor may be an assembly for positioning based on RTK technology. The satellite positioning sensor may, certainly, also be an assembly for positioning based on other technologies (such as, GPS). This embodiment is not limited to the type of the satellite positioning sensor.

Specifically, before executing a working task, the processing device 30 controls the operation of the moving assembly10, and collects the positioning data of the current position of the autonomous working apparatus (including the height data of the current position) in real time according to the satellite positioning sensor during the movement, thereby drawing an area map of the working area. If the height of the area increases continuously and the increasing value is greater than a preset value every time, the slope of the area may be considered as exceeding a slope threshold, and the area is the foregoing first area. The processing device 30 compares height data at various positions in the working area to calibrate all first areas in the working area.

Certainly, position information of the first area may also be obtained in other manners. For example, position information of the first area transmitted by another device may be received. Or, position information of the first area input by a user may be received. Or, position information of the first area stored in advance may be read. Certainly, the manner of obtaining the position information of the first area may be another manner. This embodiment is not limited to the manner of obtaining the position information of the first area.

In another implementation, each first area corresponds to one area identifier. At this moment, the processing device 30 may determine whether the area in the direction of travel of the autonomous working apparatus is the first area through a detection result of the area identifier. Certainly, other second areas (high-density grass areas) and third areas (pit areas) may also be identified by the foregoing area identifier. Only the first area is illustrated here.

Optionally, the area identifier is spaced from the first area by a certain distance to ensure that the autonomous working apparatus 100 can determine, through the area identifier, the type of an area at which the apparatus will arrive before arriving at the first area. At this moment, the autonomous working apparatus 100 is provided with an identifier detection assembly. The identifier detection assembly is configured to detect the area identifier. The processing device 30 receives detection data of the identifier detection assembly and determines whether the area in the direction of travel is the first area according to a detection result of the identifier detection assembly. Optionally, the area identifier may be a graphic identifier (such as, a two-dimensional barcode, or a bar label). Correspondingly, the identifier detection assembly may be a camera, a scanner, or the like. This embodiment is not limited to the implementation of the area identifier and the implementation of the identifier detection assembly.

In an implementation, the processing device 30 is further configured to determine whether a distance between the autonomous working apparatus 100 and the first area in the direction of travel is less than or equal to a preset distance. If yes, the at least one processing instruction associated with the first sensing element 201 is generated. Optionally, the preset distance may be pre-stored in the autonomous working apparatus, and may be set to 2 m, 1 m, or the like. Optionally, the distance between the current position and the first area refers to a linear distance between the current position and the first area in the direction of travel.

In an implementation, the first sensing element includes at least one of an ultrasonic sensor and a millimeter-wave radar. The sensor may quickly detect objects around the autonomous working apparatus 100. Optionally, the detection distance of the ultrasonic sensor is less than or equal to 60 cm. For example, the detection distance may be 40 cm, 45 cm, 50 cm, 55 cm, or 60 cm. Optionally, the detection distance of the ultrasonic sensor is less than or equal to 38 cm. For example, the detection distance may be 10 cm, 20 cm, 30 cm, 35 cm, or 38 cm. If the detection distance of the ultrasonic sensor is too large, it is prone to misjudgment. If the detection distance is too small, it is not conducive to detecting objects around the autonomous working apparatus 100.

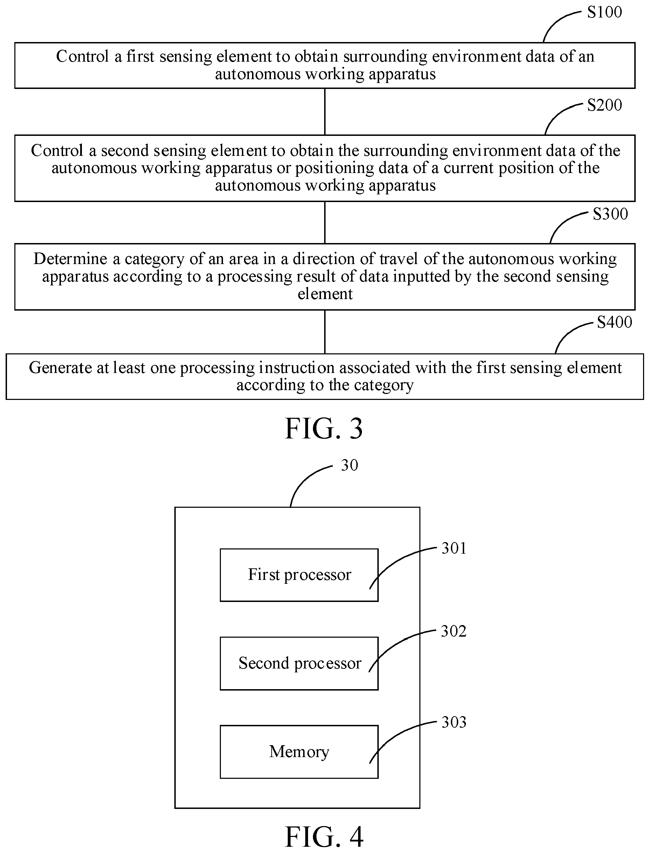

FIG. 3 is a flowchart of a control method for an autonomous working apparatus according to an embodiment of this application. This embodiment will be exemplified by the method being applied to the autonomous working apparatus 100 shown in FIG. 1 and the execution entity of each step being the processing device 30 in the system. The method includes at least the following steps:
S 100: Control the first sensing element 201 to obtain surrounding environment data of the autonomous working apparatus.

Optionally, the first sensing element 201 includes an ultrasonic sensor, a millimeter-wave radar, and the like.

S200: Control the second sensing element 202 to obtain the surrounding environment data of the autonomous working apparatus 100 or positioning data of a current position of the autonomous working apparatus 100.

Optionally, the second sensing element 202 includes a LIDAR sensor, a vision sensor, a satellite positioning sensor, and the like.

S300: Determine a category of an area in a direction of travel of the autonomous working apparatus 100 according to a processing result of data input by the second sensing element 202.

The category of the area in the direction of travel of the autonomous working apparatus 100 includes a first area having a gradient within a preset range. Optionally, the gradient range is 20-70 degrees. Optionally, the gradient range is 25-60 degrees. Optionally, the gradient range is 25-55 degrees. The category of the area in the direction of travel of the autonomous working apparatus 100 further includes a second area having a grass height within a preset height range.

S400: Generate at least one processing instruction associated with the first sensing element according to the category.

Optionally, in view of a first area having a gradient within a preset range, the processing device 30 is configured to generate an instruction for instructing to reduce a detection distance of the first sensing element 201 when determining that the area in the direction of travel of the autonomous working apparatus 100 is the first area.

Optionally, in view of the first area having the gradient within the preset range, the processing device 30 is configured to generate an instruction for instructing to turn off the first sensing element 201 when determining that the area in the direction of travel of the autonomous working apparatus 100 is the foregoing first area.

Optionally, in view of the first area having the gradient within the preset range, the processing device 30 is configured to generate an instruction for instructing to filter the surrounding environment data of the autonomous working apparatus 100 obtained by the first sensing element 201 when determining that the area in the direction of travel of the autonomous working apparatus 100 is the foregoing first area. Optionally, the second sensing element 202 is configured to obtain the surrounding environment data of the autonomous working apparatus 100. The processing device 30 is further configured to determine whether an obstacle surrounds the autonomous working apparatus 100 based on fusion of data input by the first sensing element 201 and the second sensing element 202. The processing device 30 is configured to generate an instruction for instructing to reduce a fusion ratio of the surrounding environment data of the autonomous working apparatus obtained by the first sensing element 201 when determining that the area in the direction of travel of the autonomous working apparatus 100 is the first area.

Related details are described with reference to the foregoing embodiments of the autonomous working apparatus 100.

To sum up, according to the control method for the autonomous working apparatus provided in this embodiment, a category of an area in a direction of travel of the autonomous working apparatus 100 is determined based on data of the second sensor 202, and the processing device 30 generates a processing instruction associated with the first sensing element 201 according to the category. The problem that the first sensing element 201 (such as an ultrasonic sensor) executes an obstacle avoidance action upon mistaken detection of a slope as an obstacle and thus cannot move forward up the slope may be at least solved. Therefore, the autonomous working apparatus of this application may normally execute the obstacle avoidance action without affecting a climbing function and a mowing task of the autonomous working apparatus.

FIG. 4 is a block diagram of a processing device 30 according to an embodiment of this application. The processing device 30 includes at least a processor and a memory 303. Optionally, the processing device includes at least a first processor 301, a second processor 302, and the memory 303. The first processor 301 may be configured to load and execute mapping and positioning programs of the autonomous working apparatus 100. The second processor 302 may be configured to load and execute a generation program of a processing instruction of the autonomous working apparatus 100 with respect to the first sensing element 201. By providing at least two processors, it is beneficial to balance the computing power, thereby ensuring the smooth operation of the autonomous working apparatus 100.

The first processor 301 and the second processor 302 may both include one or more processing cores, for example, a 4-core processor, an 8-core processor, and the like. The processor 301 may be implemented in at least one hardware form of digital signal processing (DSP), a field-programmable gate array (FPGA), and a programmable logic array (PLA). The processor 301 may further include a main processor and a co-processor. The main processor is a processor for processing data in a wake-up state, also referred to as a central processing unit (CPU). The co-processor is a low-power processor for processing data in a standby state. In some embodiments, the first processor 301 and the second processor 302 may be integrated with a graphics processing unit (GPU). The GPU is configured to render and draw content that needs to be displayed on a display screen. In some embodiments, the processor 301 may further include an artificial intelligence (AI) processor. The AI processor is configured to process computing operations related to machine learning.

The memory 303 may include one or more computer-readable storage media. The computer-readable storage medium may be non-transient. The memory 303 may further include a high-speed random access memory and a nonvolatile memory, for example, one or more disk storage devices or flash storage devices. In some embodiments, the non-transient computer-readable storage medium in the memory 303 is configured to store at least one instruction. The at least one instruction is used to be executed by the first processor 301 and the second processor 302 to implement the control method for the autonomous working apparatus provided in the method embodiments of this application.

In some embodiments, the control apparatus for the autonomous working apparatus further optionally includes: a peripheral interface and at least one peripheral. The processor, the memory 303, and the peripheral interface may be connected through a bus or a signal cable. Each peripheral may be connected to the peripheral interface through a bus, a signal cable, or a circuit board. Schematically, the peripheral includes, but is not limited to: a cleaning mechanism, a radio frequency circuit, a touch display screen, an audio circuit, a power supply, and the like.

The control apparatus for the autonomous working apparatus may, certainly, further include fewer or more assemblies. This embodiment is not limited thereto.

Optionally, this application further provides a computer-readable storage medium. The computer-readable storage medium stores a computer program. The program is loaded and executed by a processor to implement the control method for the autonomous working apparatus 100 in the method embodiments.

Optionally, this application further provides a computer product. The computer product includes a computer-readable storage medium. The computer-readable storage medium stores a program. The program is loaded and executed by a processor to implement the control method for the autonomous working apparatus 100 in the method embodiments.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of this application, which are described specifically and in detail, but cannot be construed as a limitation to the patent scope of this application. It is to be noted that for a person of ordinary skill in the art, several transformations and improvements may be made without departing from the idea of this application. These transformations and improvements belong to the protection scope of this application. Therefore, the protection scope of the patent of this application shall be subject to the appended claims.

## Claims

1. An autonomous working apparatus, the autonomous working apparatus comprising:
a moving assembly, configured to drive the autonomous working apparatus to move in a working area;
a sensor assembly, comprising at least a first sensing element and a second sensing element different from the first sensing element, the first sensing element being configured to obtain surrounding environment data of the autonomous working apparatus, and the second sensing element being configured to obtain the surrounding environment data of the autonomous working apparatus or positioning data of a current position of the autonomous working apparatus; and
a processing device, connected at least to the sensor assembly, the processing device being configured to determine a category of an area in a direction of travel of the autonomous working apparatus based on a processing result of data input by the second sensing element and to generate at least one processing instruction associated with the first sensing element according to the category.

2. The autonomous working apparatus according to claim 1, wherein
the category of the area comprises a first area having a gradient within a preset range, and the processing device is configured to generate an instruction for instructing to reduce a detection distance of the first sensing element when determining that the area in the direction of travel of the autonomous working apparatus is the first area.

3. The autonomous working apparatus according to claim 1, wherein
the category of the area comprises a first area having a gradient within a preset range, and the processing device is configured to generate an instruction for instructing to turn off the first sensing element when determining that the area in the direction of travel of the autonomous working apparatus is the first area.

4. The autonomous working apparatus according to claim 1, wherein
the category of the area comprises a first area having a gradient within a preset range, and the processing device is configured to generate an instruction for instructing to filter the surrounding environment data of the autonomous working apparatus obtained by the first sensing element when determining that the area in the direction of travel of the autonomous working apparatus is the first area.

5. The autonomous working apparatus according to claim 1, wherein
the second sensing element is configured to obtain the surrounding environment data of the autonomous working apparatus;
the processing device is further configured to determine whether an obstacle surrounds the autonomous working apparatus based on fusion of data input by the first sensing element and the second sensing element; and
the category of the area comprises a first area having a gradient within a preset range, and the processing device is configured to generate an instruction for instructing to reduce a fusion ratio of the surrounding environment data of the autonomous working apparatus obtained by the first sensing element when determining that the area in the direction of travel of the autonomous working apparatus is the first area.

6. The autonomous working apparatus according to claim 5, wherein the second sensing element comprises at least one of a LIDAR sensor and a vision sensor.

7. The autonomous working apparatus according to claim 1, wherein
the second sensing element is configured to obtain positioning data of a current position of the autonomous working apparatus, the positioning data comprising height data of the current position of the autonomous working apparatus; and
the processing device is configured to calibrate a position of a first area having a gradient within a preset range in the working area according to the height data of the surface of the working area before the autonomous working apparatus executes a working task.

8. The autonomous working apparatus according to claim 7, wherein the processing device is further configured to determine whether a distance between the autonomous working apparatus and the first area in the direction of travel is less than or equal to a preset distance, and to generate the at least one processing instruction if the distance is less than or equal to the preset distance.

9. The autonomous working apparatus according to claim 7, wherein the second sensing element comprises a satellite positioning sensor.

10. The autonomous working apparatus according to any one of claims 1-9, wherein the first sensing element comprises an ultrasonic sensor.

11. The autonomous working apparatus according to claim 10, wherein a detection distance of the ultrasonic sensor is less than or equal to 60 cm.

12. The autonomous working apparatus according to claim 10, wherein a detection distance of the ultrasonic sensor is less than or equal to 38 cm.

13. A control method for an autonomous working apparatus, the autonomous working apparatus comprising a moving assembly, a sensor assembly, and a processing device connected at least to the sensor assembly, the sensor assembly comprising at least a first sensing element and a second sensing element different from the first sensing element, the control method comprising:
controlling the first sensing element to obtain surrounding environment data of the autonomous working apparatus;
controlling the second sensing element to obtain the surrounding environment data of the autonomous working apparatus or positioning data of a current position of the autonomous working apparatus;
determining a category of an area in a direction of travel of the autonomous working apparatus according to a processing result of data input by the second sensing element; and
generating at least one processing instruction associated with the first sensing element according to the category.

14. A processing device, the processing device comprising at least one processor and a storage medium, the memory storing a program loaded and executed by the at least one processor to implement the steps of the control method for the autonomous working apparatus according to claim 13.

15. A computer-readable storage medium, having a computer program stored thereon, the computer program, when executed by a processor, implementing the steps of the control method according to claim 13.
